# NEUE EUROPÄISCHE PATENTSCHRIFT

(11) **EP 0 677 558 B2**
(45) Veröffentlichungstag und Bekanntmachung des Hinweises auf die Entscheidung über den Einspruch: **17.09.2003**
(45) Hinweis auf die Patenterteilung: 15.10.1997
(21) Anmeldenummer: 95103939.5
(22) Anmeldetag: 17.03.1995
(51) Int. Cl.: C03C 8/14, C09C 1/00

(54) **Verfahren zur Herstellung von Purpurpigmenten**
Process for manufacturing purple pigments
Procédé de fabrication de pigments pourpres

(30) Priorität: 30.03.1994 DE 4411104
(43) Veröffentlichungstag der Anmeldung: 18.10.1995
(73) Patentinhaber: dmc2 Degussa Metals Catalysts Cerdec AG, 60287 Frankfurt am Main (DE)
(72) Erfinder: Fritsche, Klaus-Dieter, Dr., D-04680 Colditz (DE); Dorbath, Bernd, Dr., D-63755 Alzenau (DE); Giesecke, Norbert, D-63486 Bruchköbel (DE); Ruhnau, Kerstin, D-04680 Colditz (DE)
(74) Vertreter: Reinhardt, Markus, Dipl.-Ing.

(56) Entgegenhaltungen:
- EP-A- 0 307 771
- EP-A- 0 501 139
- US-A- 2 254 976
- US-A- 4 698 324
- US-A- 4 839 327
- DATABASE WPI Week 9106 Derwent Publications Ltd., London, GB; AN 91-041113 & JP-A-02 308 866 (TOSHIBA) , 21.Dezember 1990
- CHEMICAL ABSTRACTS, vol. 109, no. 26, 26.Dezember 1988 Columbus, Ohio, US; abstract no. 232852b, Seite 95; & JP-A-63 197 638 (ADACHI SHIN SANGYO) 16.August 1988
- DATABASE WPI Section Ch, Week 9421 Derwent Publications Ltd., London, GB; Class J04, AN 94-061881 & JP-A-06 016 422 (AGENCY OF IND. SCI. & TECHNOLOGY) , 25.Januar 1994
- Gmelins Handbuch der Anorganischen Chemie, 8.Auflage, Verlag Chemie Weinheim, Gold, System Nr. 62, 1954, Seiten 399-400.

## Beschreibung

Die Erfindung richtet sich auf ein Verfahren zur Herstellung von Purpurpigmenten auf der Basis von mit kolloidalem Gold beschichteten einbrennfähigen Trägermaterialien, insbesondere Glasflüssen.

Purpurpigmente auf der Basis von keramischen Materialien und kolloidalem Gold sind auf unterschiedliche Weise zugänglich und finden schon lange Verwendung zur Erzeugung keramischer Dekore sowie zum Pigmentieren von Kunststoffen, Lacken, kosmetischen Produkten und Dekorfarben.

Bis vor kurzem umfaßte die Herstellung von Purpurpigmenten mehrere Prozeßstufen: (a) Ausfällung von gelförmigem Cassius'schem Goldpurpur aus wäßrigen Goldsalzlösungen mittels Reduktionsmitteln - übliüblicherweise Zinn(ll)-Salze, (b) Aufmischen des feuchten Goldpurpurs mit feingemahlenem Glas, (c) Vorsintern des Gemischs bei 600 bis 800 °C, wobei die Goldpartikel zumindest teilweise von Glas umhüllt werden, und (d) Feinmahlung des gesinterten Materials. Die DE 41 06 520 lehrt ein vereinfachtes Verfahren zur Herstellung derartiger Purpurpigmente: Hierbei wird eine Glasfritte mit einem mittleren Teilchendurchmesser im Bereich von 0,5 bis 50 µm mit kolloidalem Gold und ggf. farbtonmodifizierenden Metallen beschichtet, indem zu einer die Glasfritte und wasserlösliche Salze der Metalle ententhaltenden wäßrigen Suspension ein Reduktionsmittel gegeben wird, das die Metalle in kolloidaler Form auf der Oberfläche der Glasfritte abscheidet; nach Abtrennung der wäßrigen Phase wird das Pigment in üblicher Weise getrocknet.

Die DE-PS 32 29 837 lehrt ein Verfahren zur Herstellung kirschroter Pigmente, wobei mit Metalloxiden beschichtete plättchenförmige Teilchen in Gegenwart organischer Lösungsmittel mit darin gelösten Goldresinaten beschichtet und anschließend bei 300 bis 900 °C, vorzugsweise 500 bis 600 °C, geglüht werden. Diesem Dokument läßt sich nicht entnehmen, anstelle organischer Goldresinate andere Goldverbindungen und anstelle organischer Lösungsmittel Wasser zu verwenden.

Aufgabe der vorliegenden Erfindung ist, ein Verfahren aufzuzeigen, das sich einfacher durchführen läßt, als vorbekannte Verfahren. Insbesondere sollte auf die Mitverwendung organischer Lösungsmittel und organischer oder anorganischer Reduktionsmittel verzichtet werden können.

Gefunden wurde ein Verfahren zur Herstellung von Purpurpigmenten auf der Basis von mit kolloidalem Gold beschichteten einbrennfähigen Trägermaterialien, umfassend inniges Inkontaktbringen eines feinpulvrigen Trägermaterials mit einer oder mehreren Goldverbindungen, wobei das Gewichtsverhältnis von Trägermaterial zu Gold in den Goldverbindungen zwischen 10 zu 1 und 2000 zu 1 liegt, das dadurch gekennzeichnet ist, daß man das Trägermaterial im wesentlichen einen Glasfuß verwendet, den Glasfuß und die Goldverbindung(en) in trockener Form innig mischt und/oder mahlt oder den Glasfuß mit einer wäßrigen Lösung oder Suspension der Goldverbindung(en) in Abwesenheit eines Reduktionsmittels miteinander in Kontakt bringt und das resultierende Gemisch bei einer Temperatur oberhalb der Zersetzungstemperatur der Goldverbindung(en) und unterhalb 300 °C bis zur Überführung der Goldverbindung(en) in kolloidales Gold thermisch behandelt.

Die weiteren Ansprüche richten sich auf bevorzugte Ausführungsformen des erfindungsgemäßen Verfahrens.

Durch die thermische Behandlung einer zersetzlichen Goldverbindung in Gegenwart einer ausreichenden Menge eines Trägermaterials läßt sich überraschenderweise unmittelbar ein stabiles Purpurpigment herstellen, ohne daß zuvor unter Verwendung eines organischen oder anorganischen Reduktionsmittels in wäßriger Phase kolloidales Gold durch Reduktion einer Goldverbindung erzeugt werden muß.

Als zu beschichtende einbrennfähige Trägermaterialien werden im wesentlichen Glasflüsse, insbesondere Glasfritten eingesetzt. In Kombination mit Glasfritten können bis zu 10 Gew-% an farbtonmodifizierten Oxiden aus der Reihe SiO₂, TiO₂, SnO₂, und CeO₂ anwesend sein. Durch Kombination von Glasflüssen mit speziellen Oxiden, wie Titandioxid und Cerdioxid, ist es möglich, die Purpurfarbe des Pigments nach Blau zu verschieben. Auch durch Verwendung von Kobaltoxid in Verbindung mit einem Glasfluß oder direkt einem kobalthaltigen Glasfluß ist es möglich, die Purpurfarbe nach Blau zu verschieben. Unter Glasfluß werden solche Stoffzusammensetzungen verstanden, welche unter den Einbrennbedingungen eine Glasschicht ausbilden. Bei den bevorzugten Glasflüssen handelt es sich um sogenannte Glasfritten, also Gläser, welche nach dem Erschmelzen abgeschreckt und aufgemahlen wurden. Bekanntlich verfügt die Fachwelt über ein bezüglich der chemischen Zusammensetzung sehr breites Spektrum an Glasfritten. Solche Glasfritten unterscheiden sich auch bezüglich ihrer physikalischen Eigenschaften, etwa ihrem Erweichungs- und Schmelzverhalten und ihrem Ausdehnungskoeffizienten α. Im erfindungsgemäßen Verfahren lassen sich transparente oder getrübte, farblose oder durch färbende Oxide gefärbte Glasfritten einsetzen. Verwendbar sind sowohl bleihaltige als auch bleifreie Glasfritten.

Bei der Herstellung der Purpurpigmente wird der Fachmann jeweils eine solche Glasfritte verwenden, deren physikalische Eigenschaften dem damit zu dekorierenden Substrat am angepaßtesten sind. Der Erweichungsbeginn von Glasfritten, wie sie zur Herstellung von Purpurpigmenten von Glas eingesetzt werden, liegt im allgemeinen zwischen 450 und 600 °C, wohingegen der Erweichungspunkt von Glasfritten für Purpurpigmente für die Dekoration von keramischen Materialien und Porzellan vorzugsweise zwischen 550 und 700 °C liegt. Es hat sich als vorteilhaft erwiesen, wenn der mittlere Teilchendurchmesser des zu verwendenden Glasflusses zwischen 0,5 und 50 µm, vorzugsweise zwischen 1 und 20 µm und insbesondere zwischen 1 und 10 µm, liegt.

Im erfindungsgemäßen Verfahren lassen sich organische oder anorganische Goldverbindungen einsetzen, welche in Gegenwart des feinteiligen Glasflusses während der thermischen Behandlung vollständig zu kolloidalem Gold zersetzt werden. Die Zersetzungstemperatur zu verwendender Goldverbindungen liegt unterhalb 300 °C, vorzugsweise zwischen 150 und 250 °C. Die zu verwendenden Goldverbindungen können wasserlöslich oder wasserunlöslich sein. Im erfindungsgemäßen Verfahren eignen sich als Goldverbindung insbesondere eine oder mehrere Verbindungen aus der Reihe Lithium-, Natrium- und Kaliumdicyanoaurat(I), Goldcyanid, Tetrahalogengoldsäure, insbesondere Tetrachlorogoldsäure und Hydrate davon, Gold(III)hydroxid, Lithium-, Natrium-, und Kaliumdisulfitoaurat(I), Gold(III)sulfid, Gold(I)thiolate und Gold(I)amminkomplexe. Besonders bevorzugt werden im Handel leicht erhältliche anorganische Goldverbindungen, wie insbesondere Tetrachlorogoldsäure und das Tetrahydrat davon, Kaliumdicyanoaurat, Goldcyanid und Goldsulfid verwendet. Sofern erwünscht, können auch wasserlösliche Goldverbindungen während des Inkontaktbringens mit dem feinpulvrigen Trägermaterial durch Zugabe eines Fällungsmittels in wasserunlösliche Goldverbindungen überführt werden: Beispielsweise läßt sich Tetrachlorogoldsäure durch Zugabe von Ammoniumsulfid in Goldsulfid und durch Zugabe von Natronlauge in Goldhydroxid und durch Zugabe von Ammoniak in eine Goldamminverbindung überführen.

Ein wesentliches Merkmal des Verfahrens besteht darin, daß das Gewichtsverhältnis Trägermaterial zu Gold in Form der anwesenden Goldverbindungen im anspruchsgemäßen Bereich liegt; bevorzugt wird ein Gewichtsverhältnis Trägermaterial zu Gold zwischen 20 zu 1 und 200 zu 1.

Gemäß einer bevorzugten Ausführungsform des Verfahrens werden der Glasfluß und eine oder mehrere zersetzliche Goldverbindungen in trockenem Zustand intensiv gemischt; alternativ hierzu oder zusätzlich können die Rohstoffe gemeinsam gemahlen werden, vorzugsweise in einer Kugelmühle.

Anstelle der sehr einfachen aber wirksamen trockenen Vermahlung der Rohstoffe des Purpurpigments ist es auch möglich, die Goldverbindung(en) in Form einer wäßrigen Lösung mit dem Glasfluß in Kontakt zu bringen, etwa durch Aufsprühen der Lösung und homogenes Mischen; zweckmäßigerweise wird die Lösungsmenge so bemessen, daß sich eine Fest-Flüssig-Phasentrennung erübrigt. Sofern auf dem Trägermaterial, vorzugsweise einem Glasfluß und insbesondere einer Glasfritte, eine aus einer löslichen Goldverbindung in wäßriger Phase hergestellte wasserunlösliche Goldverbindung niedergeschlagen werden soll, wird zu einer wäßrigen Suspension des Trägermaterials und einer löslichen Goldverbindung ein Fallungsmittel zugegeben, anschließlich wird die Suspension filtriert und bei Bedarf gewaschen.

Das durch trockenes Inkontaktbringen der Rohstoffe oder durch einen der vorgenannten Naßprozesse hergestelltes Trägermaterial und Goldverbindung(en) enthaltende Gemisch wird der thermischen Behandlung zugeführt, wobei, sofern anwesend, zunächst Wasser verdunstet und anschließend die Goldverbindung(en) zu kolloidalem Gold zersetzt werden. Die thermische Behandlung erfolgt bei einer Temperatur unterhalb der Sintertemperatur des Trägermaterials - hierunter wird der Erweichungsbeginn verstanden. Die thermische Behandlung erfolgt unter 300 °C und insbesondere zwischen 150 und 250 °C. Die Behandlungsdauer liegt im allgemeinen zwischen 10 Minuten und etwa 6 Stunden.

Der Farbton des Purpurpigments läßt sich dadurch modifizieren, daß das Trägermaterial vor, während oder nach der Inkontaktbringung mit mindestens einer Goldverbindung zusätzlich mit mindestens einer Verbindung von Ag, Cu, Co, Ni, Sn, Ru, Rh, Pd, Os, Ir, Pt in fester oder in wäßriger Form in wirksamer Menge in Kontakt gebracht wird. Die der Farbtonmodifizierung dienenden Verbindungen werden dabei gleichfalls auf der Oberfläche des Trägermaterials abgeschieden. Alternativ oder ergänzend hierzu können die farbtonmodifizierenden Verbindungen auch nach der thermischen Behandlung auf das bereits gebildete Purpurpigment aufgebracht werden. Besonders bevorzugt werden Silberverbindungen, wie Silbernitrat, Silbercarbonat, Silberoxalat und Silbertartrat zum Zwecke der Verschiebung des Purpurfarbtons nach Rot verwendet. Die Einsatzmenge an Metallen der farbtonmodifizierenden Verbindungen liegt üblicherweise zwischen 1 und 100 Gew.-%, insbesondere zwischen 5 und 50 Gew.-%, bezogen auf Gold.

Zur Durchführung des erfindungsgemäßen Verfahrens sind weder Reduktionsmittel noch organische Lösungsmittel erforderlich. In der besonders bevorzugten Ausführungsform umfaßt die Herstellung ausschließlich einen intensiven Mischprozeß und die thermische Behandlung bei einer Temperatur unterhalb 300 °C. Ein erneutes Mahlen nach der thermischen Behandlung ist damit nicht erforderlich.

Die nach dem erfindungsgemäßen Verfahren erhältlichen Pigmente bzw. Pigment-Vorprodukte weisen zum Teil noch nicht die endgültige Purpurfarbe auf, welche im Rahmen des Dekorbrands erhalten wird. Es ist ein Vorteil der erfindungsgemäßen Pigmente, daß die thermische Behandlung unter mäßigen Bedingungen erfolgen und im Falle ihrer Verwendung als Pigment für keramische Zwecke ohne Nachteil auf der Stufe eines Pigment-Vorproduktes beendet werden kann.

### Beispiel 1

Auf feingemahlenes niedrigschmelzendes Bleiborosilikat (Glasfritte Nr. 10140 der Cerdec AG) wird 1 Gew.-% Gold, bezogen auf das Glaspulver, als 5 gew.-%ige Lösung von Tetrachlorogoldsäure in Wasser gegeben und feucht gemischt. Die sich anschließende thermische Behandlung des Gemischs erfolgt bei 180 bis 190 °C und führt zu einem hellvioletten Pigment.

Nach trockener Applikation des Pigments durch einfachen Pulverauftrag sowie nach Siebdruckapplikation einer das Pigment und ein Siebdruckmedium enthaltenden Farbpaste auf Porzellan als auch Keramikfliesen und Einbrennen bei 820 °C und alternativ bei 870 °C resultiert eine violette Farbe, die sich trotz der unterschiedlichen Brenntemperatur kaum unterscheidet.

### Beispiel 2

Zu einer wäßrigen Suspension eines feingemahlenen niedrigschmelzenden Glaspulvers wird zunächst Tetrachlorogoldsäure zugegeben und gelöst; anschlieβend wird Ammoniumsulfid in einer zur quantitativen Ausfällung des Golds als Goldsulfid ausreichenden Menge zugesetzt. Die Suspension wird filtriert und gewaschen; der Feststoff wird auf 250 °C erwärmt, wobei er trocknet und gleichzeitig die Goldverbindung thermisch zersetzt wird - Goldgehalt, bezogen auf Glaspulver, 1 Gew.-%. Das erhaltende Pigment brennt auf Porzellan und Keramikfliesen purpurfarben ein.

### Beispiel 3

In eine wäßrige Suspension einer feingemahlenen Glasfritte (Bleiborsilikat) wird Tetrachlorogoldsäure eingetragen und gelöst - Goldgehalt 1 Gew.-%, bezogen auf die Glasfritte, Feststoffgehalt der Suspension 65 %. Zur Suspension wird konzentrierte Ammoniaklösung gegeben -10 ml/g Gold -, wobei eine Goldamminverbindung auf der Glasfritte ausgefällt wird. Der suspendierte Feststoff wird abfiltriert, gewaschen und bei 250 °C thermisch behandelt. Es entsteht ein violettes Pigment, welches auf Glas, Porzellan und Fliesen purpurfarben einbrennt.

### Beispiel 4

Analog Beispiel 3 wird in wäßriger Suspension ein bleifreies, feingemahlenes niedrigschmelzendes Glas (Typ 10150 der Cerdec AG) unter Verwendung von Tetrachlorogoldsäure und Ammoniak mit einer Goldamminverbindung belegt. Die wäßrige Suspension wird mit Salpetersäure neutral gestellt; anschließend wird eine frisch hergestellte Suspension von Silberoxalat zugemischt - das abfiltrierte, gewaschene und bei 250 °C thermisch behandelte grauviolette Pigment enthält 1 Gew.-% Gold und 1 Gew.-% Silber. Das erhaltene Pigment brennt auf Glas, Porzellan und Fliesen purpurrot ein.

### Beispiel 5

Eine bleifreie Glasfritte, enthaltend im wesentlichen SiO₂, B₂O₃, Na₂O und 10 Gew.-% TiO₂, wird mit einer Na₃Au(SO₃)₂ enthaltenden wäßrigen Lösung angeteigt - 0,1 % Au, bezogen auf die Fritte. Das feuchte Produktgemisch wird bei 275 °C getrocknet und thermisch behandelt, wobei ein purpurfarbenes Pigment erhalten wird. Beim Einbrennen des Pigments auf Porzellan wird ein blaustichiges purpurfarbenes Dekor erhalten - die Blaustichigkeit wird auf den hohen TiO₂-Gehalt in der Glasfritte zurückgeführt.

## Patentansprüche

1. Verfahren zur Herstellung von Purpurpigmenten auf der Basis von mit kolloidalem Gold beschichteten einbrennfähigen Trägermaterialien, umfassend inniges Inkontaktbringen eines feinpulvrigen Trägermaterials mit einer oder mehreren Goldverbindungen, wobei das Gewichtsverhältnis von Trägermaterial zu Gold in den Goldverbindungen zwischen 10 zu 1 und 2000 zu 1 liegt,
**dadurch gekennzeichnet,**
**daß** man als Trägermaterial im wesentlichen einen Glasfluß verwendet, den Glasfluß und die - Goldverbindung(en) in trockener Form innig mischt "und/oder mahlt oder den Glasfluß mit einer wäßrigen Lösung oder Suspension der Goldverbindung(en) in Abwesenheit eines Reduktionsmittels miteinander in Kontakt bringt und das resultierende Gemisch bei einer Temperatur oberhalb der Zersetzungstemperatur der Goldverbindung(en) und unterhalb 300 °C bis zur Überführung der Goldverbindung(en) in kolloidales Gold thermisch behandelt.

2. Verfahren nach Anspruch 1,
**dadurch gekennzeichnet,**
**daß** man als Glasfluß eine Glasfritte mit einem mittleren Teilchendurchmesser im Bereich von 0,5 µm bis 50 µm verwendet.

3. Verfahren nach Anspruch 1 oder 2,
**dadurch gekennzeichnet,**
**daß** man eine oder mehrere Goldverbindung(en) aus der Reihe Li-, Na- und K-dicyanoaurat(l), Goldcyanid, Tetrahalogengoldsäure, insbesondere HAuCl₄ und Hydrate davon, Li-, Na- und K-disulfitoaurat (l), Goldsulfid, Gold(l)thiolate, Gold(l)aminkomplexe und Goldoxid verwendet.

4. Verfahren nach einem oder mehreren der Ansprüche 1 bis 3,
**dadurch gekennzeichnet,**
**daß** man den Glasfluß und die Goldverbindung(en) in einer solchen Menge miteinander in Kontakt bringt, daß das Gewichtsverhältnis Trägermaterial zu Gold zwischen 20 zu 1 und 200 zu 1 liegt.

5. Verfahren nach einem oder mehreren der Ansprüche 1 bis 4,
**dadurch gekennzeichnet,**
**daß** man die thermische Behandlung im Bereich zwischen 150 und 250 °C durchführt.

6. Verfahren nach einem oder mehreren der Ansprüche 1 bis 5,
**dadurch gekennzeichnet,**
**daß** man eine wasserlösliche Goldverbindung in Wasser löst, die Lösung mit dem Glasfluß in Kontakt bringt und das von überschüssiger Lösung befreite Produkt der thermischen Behandlung zuführt.

7. Verfahren nach einem oder mehreren der Ansprüche 1 bis 5,
**dadurch gekennzeichnet,**
**daß** man eine wasserlösliche Goldverbindung in Wasser löst, die Lösung mit dem Glasfluß in Kontakt bringt, der Suspension ein Fällungsmittel zur Überführung der löslichen Goldverbindung in eine unlösliche zusetzt und das von überschüssiger Lösung befreite Produkt der thermischen Behandlung zuführt.

8. Verfahren nach einem oder mehreren der Ansprüche 1 bis 7,
**dadurch gekennzeichnet,**
**daß** man zwecks Farbtonmodifizierung den Glasfluß vor, während oder nach der Inkontaktkbringung mit mindestens einer Goldverbindung und/oder nach der thermischen Behandlung zusätzlich mit mindestens einer Verbindung von Ag, Cu, Co, Ni, Sn, Ru, Rh, Pd, Os, lr, Pt in fester oder in gelöster Form in wirksamer Menge in Kontakt bringt, wobei die der Farbtonmodifizierung dienenden Verbindungen auf der Oberfläche des Trägermaterials abgeschieden werden.

9. Verfahren nach einem oder mehreren der Ansprüche 1 bis 5 oder 8,
**dadurch gekennzeichnet,**
**daß** man ein aus einer oder mehreren Glasfritten und bei Bedarf bis zu 10 Gew.-% an farbtonmodifizierenden Oxiden aus der Reihe TiO₂, CeO₂, SnO₂ und SiO₂ bestehendes Trägermaterial, mindestens eine feste Goldverbindung und bei Bedarf zusätzlich farbtonmodifizierende Verbindungen aus der Reihe von Verbindungen von Ag, Cu, Co, Ni, Rh, Ru, Pd, Os, Ir und Pt in trockenem Zustand gemeinsam vermahlt und das Gemisch bei einer Temperatur im Bereich von 150 °C bis unterhalb 300 °C thermisch behandelt.

10. Purpurpigment auf der Basis von mit kolloidalem Gold beschichtetem Glasfluß, erhältlich nach einem Verfahren der Ansprüche 1 bis 9.

11. Verfahren nach Anspruch 7,
**dadurch gekennzeichnet,**
**daß** man das Fällungsmittel aus der Reihe Ammoniumsulfid, Natronlauge und Ammoniak auswählt.

## Claims

1. Process for the production of purple pigments based on stovable support materials coated with colloidal gold, comprising bringing a finely powdered support material into intimate contact with one or more gold compounds, wherein the weight ratio of support material to gold in the gold compounds is between 10:1 and 2,000:1,
**characterised in that**
a glass flux is substantially used as the support material, the glass flux and the gold compound(s) are intimately mixed and/or ground in dry form or the glass flux is brought into contact with an aqueous solution or suspension of the gold compound(s) in the absence of a reducing agent and the resultant mixture is thermally treated at a temperature above the decomposition temperature of the gold compound(s) and below 300°C until the gold compound(s) are converted into colloidal gold.

2. Process according to claim 1,
**characterised in that**
a glass frit with an average particle diameter in the range from 0.5 µm to 50 µm is used as the glass flux.

3. Process according to claim 1 or 2,
**characterised in that**
one or more gold compound(s) from the series Li, Na and K dicyanoaurate(I), gold cyanide, tetrahaloauric acid, in particular HAuCl₄ and hydrates thereof, Li, Na and K disulphitoaurate(I), gold sulphide, gold(I) thiolates, gold(I) amine complexes and gold oxide are used.

4. Process according to one or more of claims 1 to 3,
**characterised in that** the glass flux and the gold compound(s) are brought into contact in a quantity such that the weight ratio of support material to gold is between 20:1 and 200:1.

5. Process according to one or more of claims 1 to 4,
**characterised in that**
the thermal treatment is performed in the range between 150°C and 250°C.

6. Process according to one or more of claims 1 to 5,
**characterised in that**
a water-soluble gold compound is dissolved in water, the solution brought into contact with the glass flux and the product, from which excess solution has been removed, is thermally treated.

7. Process according to one or more of claims 1 to 5,
**characterised in that**
a water-soluble gold compound is dissolved in water, the solution brought into contact with the glass flux, a precipitating agent to convert the soluble gold compound into an insoluble compound is added to the suspension and the product, from which excess solution has been removed, is thermally treated.

8. Process according to one or more of claims 1 to 7,
**characterised in that**,
for the purpose of hue modification, the glass flux is additionally brought into contact with an effective quantity of at least one compound of Ag, Cu, Co, Ni, Sn, Ru, Rh, Pd, Os, Ir, Pt in solid or dissolved form before, during or after it is brought into contact with at least one gold compound and/or after thermal treatment, wherein the compounds acting to modify hue are deposited on the surface of the support material.

9. Process according to one or more of claims 1 to 5 or 8,
**characterised in that**
a support material consisting of one or more glass frits and, if necessary, up to 10 wt.% of hue-modifying oxides from the series TiO₂, CeO₂, SnO₂ and SiO₂, at least one solid gold compound and, if necessary, additionally hue-modifying compounds from the series of compounds of Ag, Cu, Co, Ni, Rh, Ru, Pd, Os, Ir and Pt are ground together when dry and the mixture is thermally treated at a temperature in the range from 150°C to. below 300°C.

10. Purple pigment based on glass flux coated with colloidal gold obtainable according to a process of claims 1 to 9.

11. Process according to claim 7,
**characterised in that**
the precipitating agent is selected from the series comprising ammonium sulphide, sodium hydroxide solution and ammonia.

## Revendications

1. Procédé de fabrication de pigments pourpres à base de matériaux de support enduits d'or colloïdal pouvant être cuits, comprenant une intime mise en contact du matériau de support finement divisé avec un ou plusieurs composés d'or, où le rapport de poids entre le matériau de support et l'or présent dans les composés d'or, est compris entre 10 à 1 et 2000 à 1,
**caractérisé en ce que**
- l'on utilise comme matériau de support pour l'essentiel un fondant de verre, que l'on mélange et/ou broie intimement avec le(s) composé(s) d'or sous forme sèche, ou
- le fondant de verre est mis en contact avec une solution ou une suspension aqueuse du(es) composé(s) d'or en l'absence d'un agent de réduction, et
- et le mélange résultant est soumis à un traitement thermique à une température supérieure à la température de décomposition du(es) composé(s) d'or et inférieure à 300°C jusqu'à la transformation du(es) composé(s) d'or en or colloïdal.

2. Procédé selon la revendication 1,
**caractérisé en ce que**
l'on utilise en tant que fondant de verre une fritte de verre présentant une taille granulométrique moyenne comprise entre 0,5 µm et 50 Um.

3. Procédé selon la revendication 1 ou 2,
**caractérisé en ce que**
l'on utilise un ou plusieurs composé(s) d'or de la série comprenant les dicyanaurates de Li, de Na, et de K, le cyanure aurique, le l'acide tétrahalogénaurique, en particulier le HAuCl4 et les hydrates de celui-ci, les disulfïtoaurates de Li., de Na, et de K, le sulfure aurique, les thiolates auriques, les complexes ammoniacatauriques et l'oxyde aurique.

4. Procédé selon un ou plusieurs des revendications 1 à 3,
**caractérisé en ce que**
l'on met en contact le fondant de verre et le(s) composé(s) d'or tels en une quantité telle que le rapport en poids matériau de support à or, est compris entre 20 à 1 et 200 à 1.

5. Procédé selon l'une ou plusieurs des revendications 1 à 4,
**caractérisé en ce que**
l'on réalise le traitement thermique à une plage comprise entre 150°C et en dessous de 250°C.

6. Procédé selon un ou plusieurs des revendications 1 à 5,
**caractérisé en ce que**
l'on dissout un composé d'or hydrosoluble dans l'eau, **en ce que** l'on met la solution en contact avec le fondant de verre et **en ce que** le produit débarrassé d'excès de solution est soumis au traitement thermique.

7. Procédé selon un ou plusieurs des revendications 1 à 5,
**caractérisé en ce que**
- l'on dissout un composé d'or hydrosoluble dans l'eau,
- l'on met la solution en contact avec le fondant de verre,
- la suspension est additionnée d'un agent de précipitation
- pour la transformation du composé d'or soluble en, un insoluble, et
- le produit débarrassé d'excès de solution est soumis au
- traitement thermique.

8. Procédé selon un ou plusieurs des revendications 1 à 7,
**caractérisé en ce que**
dans le but de modifier la couleur du pigment pourpre, l'on met le fondant de verre en contact avant, pendant ou après la mise en contact avec au moins un composé d'or et/ou après le traitement thermique en addition avec une quantité efficace d'au moins un composé de Ag, Cu, Co, Ni, Sn, Ru, Rh, Pd, Os, Ir, Pt sous forme solide ou dissoute, où les composés servant à modifier la couleur sont déposés sur la surface du matériau de support.

9. Procédé selon au moins une revendication 1 à 5 ou 8,
**caractérisé en ce que**
- l'on broie conjointement à l'état sec un matériau de support composé d'un ou plusieurs verres de frittage et au besoin jusqu'à 10 % en poids d'oxydes modifiant la couleur de la série TiO₂, CeO₂, SnO₂ et SiO₂, au moins un composé d'or solide et au besoin en addition des composés modifiant la couleur, de la série des composés de Ag, Cu, Co, Ni, Ru, Pd, Os, Ir et Pt, et
- l'on soumet ce mélange à un traitement thermique à une température dans la plage allant de 150°C jusqu'à en dessous de 300°C.

10. Pigment pourpre à base de fondant de verre enduit d'or colloïdal, obtenu par un procédé selon les revendications 1 à 9.

11. Procédé selon la revendication 7,
**caractérisé en ce que**
l'on choisi l'agent de précipitation parmi la série comprenant le sulfure ammonique, la soude caustique et l'ammoniaque.
